# EUROPÄISCHE PATENTSCHRIFT

(11) **EP 2 031 831 B1**
(45) Veröffentlichungstag und Bekanntmachung des Hinweises auf die Patenterteilung: **03.10.2012**
(21) Anmeldenummer: 08156455.1
(22) Anmeldetag: 19.05.2008
(51) Int. Cl.: H04L 29/08, H04L 12/28

(54) **EINRICHTUNG ZUR UMLEITUNG IN EINEM PERSÖNLICHEN NETZWERK EINER IMS-DOMÄNE**
DEVICE FOR REDIRECTING IN A PERSONAL NETWORK OF AN IMS DOMAIN
DISPOSITIF DE TRANSFERT DANS UN RÉSEAU PERSONNEL D'UN DOMAINE IMS

(30) Priorität: 18.05.2007 EP 07108487
(43) Veröffentlichungstag der Anmeldung: 04.03.2009
(73) Patentinhaber: Vodafone Holding GmbH, 40213 Düsseldorf (DE)
(72) Erfinder: Lu, Yang, 40489 Düsseldorf (DE); Wild, Peter, 47807 Krefeld (DE)
(74) Vertreter: Weisse, Renate

(56) Entgegenhaltungen:
- WO-A-2007/045991
- US-A1- 2004 162 092
- 3GPP: "Technical Specification Group Service and System Aspects; Service requirements for Personal Network Management (PNM); Stage 1 (Release 8)" 3GPP TS 22.259, Nr. V8.3.0, 26. März 2007 (2007-03-26), XP002510101 3GPP

## Beschreibung

### Technisches Gebiet

Die Erfindung betrifft eine Einrichtung für ein persönliches Netzwerk einer IMS-Domäne, welches in einem öffentlichen Netzwerk und/oder einem lokalen Netzwerk vorgesehen ist, enthaltend
a) wenigstens ein Gerät, welches in dem persönlichen Netzwerk integriert ist,
b) eine Kommunikations- und/oder Steuereinheit zur Kommunikation mit dem Gerät und/oder zur Steuerung des Geräts,
c) eine Vermittlungseinheit zur Vermittlung der Daten zwischen der Kommunikations- und/oder Steuereinheit und dem Gerät-.,
*d) Umleitungsmittel zum Umleiten von Daten auf eine weitere Kommunikations- und*/*oder Steuereinheit.*

### Stand der Technik

Ein Mobilfunknetz der 3. Generation, beispielsweise nach dem UMTS- (Universal Mobil Telecommunication System) Standard, enthält neben einem leitungsorientierten (CS = Circuit Switched) Subsystem für leitungs- bzw. kanalvermittelte Verbindungen und einem paketorientierten (PS = Packet Switched) Subsystem zur Vermittlung von Datenpaketen auch ein Internet Protokoll Multimedia Subsystem (IMS). Diese Subsysteme oder Bereiche werden im UMTS auch Domänen genannt und sind in dem Vermittlungsnetz bzw. Kernnetz (Core Network Domäne) eines Mobilfunknetzes vorgesehen.

Die IMS-Domäne dient dazu, IP-basierte (Internet-Protokoll-basierte) Multimedia-Dienste anzubieten und insbesondere Internetdienste wie beispielsweise Internet-Telefonie, Internet-Radio oder Internet-Fernsehen auch für Mobilfunkteilnehmer zugänglich zu machen. Mit dem IMS wird eine gemeinsame Plattform für Echtzeit- und andere Dienste geschaffen und eine Konvergenz von CS- und PS-Netzwerkelementen eingeführt. Das IMS ist eine nach 3GPP (Third Generation Partnership Projekt) standardisierte Netzwerkarchitektur für Telekommunikationsnetzwerke und dem Fachmann bspw. aus "3GPP TS 23.228: IP multimedia subsystem; Stage 2" bekannt.

Das IMS ermöglicht einem Mobilfunkteilnehmer eine Inanspruchnahme von Multimediadiensten in so genannten Sitzungen oder engl. Sessions und steuert und kontrolliert diese Sitzungen. Dazu verwendet das IMS zur Signalisierung u. a. ein IPbasiertes Session Initial Protokoll (SIP). Zur Nutzung von Multimediadiensten registriert sich ein Mobilfunkteilnehmer bei einem Anbieter und erhält eine private Nutzeridentität (IMPI = IP Multimedia Private User Identifier) und eine oder mehrere öffentliche Nutzeridentitäten (IMPU = IP Multimedia Public User Identifierer). Mit der privaten Nutzeridentität meldet sich ein Teilnehmer bei einer IMS-Domäne zur Nutzung von Diensten über die IMS-Domäne an. Die öffentlichen Nutzeridentitäten dienen als öffentliche Adressen des Teilnehmers in der IMS-Domäne für Dienste oder andere Teilnehmer und können beispielsweise als SIP-Adresse im SIP-URI-Format (SIP-Uniform Resource Identifier) vorliegen.

Eine SIP-URI-Adresse ist bezüglich des Nutzers eindeutig und im Aufbau einer E-Mail-Adresse ähnlich. Eine SIP-URI-Adresse kann beispielsweise "sip:nutzer@anbieter.com" lauten und ist nicht an einen Anschluss oder ein Gerät gebunden, sondern von überall auf der Welt mit einem IMS-fähigen Endgerät nutzbar. Die gleiche SIP-URI-Adresse kann somit von mehreren angemeldeten und aktivierten Endgeräten verwendet werden.

Gegenwärtig verfügen immer mehr Mobilfunkteilnehmer über mehrere verschiedene Mobilfunkendgeräte mit unterschiedlichen Funktionalitäten zur mobilen Kommunikation. Auch besitzen Geräte im Heimbereich eines Mobilfunkteilnehmers, beispielsweise Haushaltsgeräte und Überwachungsanlagen, zunehmend eine Schnittstelle zur Anbindung an ein Netzwerk im persönlichen Bereich (PAN = Personal Area Network) oder an ein Mobilfunkendgerät. Um den Einsatz und die Verwaltung der verschiedenen Mobilfunkendgeräte und netzwerkfähigen Geräte eines Teilnehmers zu erleichtern, werden so genannte persönliche oder private Netze (PN) mit einer Managementeinrichtung (PNM: Personal Network Management) in einem Mobilfunknetz eingesetzt.

Mit Hilfe der PNM wird eine Vernetzung aller Mobilfunkendgeräte und netzwerkfähigen Geräte eines Teilnehmers eingerichtet und verwaltet. Eine Konfiguration des PNM ist direkt durch den Teilnehmer oder mit Unterstützung eines Mobilfunknetzbetreibers möglich. Ein PN ermöglicht beispielsweise eine Weiterleitung eingehender Nachrichten je nach Datenformat an das am besten zur Darstellung geeignete Mobilfunkendgerät. Dem Fachmann ist die Funktionsweise von persönlichen Netzwerken z.B. aus der Spezifikation 3GPP TS 22.259 V8.3.0 (2006-06) geläufig.

Das Dokument 3GPP: " Technical Specificalion Group Service and System Aspects; Service requirements for Personal Network Management (PNM); Stage 1 (Release 8) ", 3GPP TS 22.259 V8.3.0, 26. März 2007*, XP002510101 beschreibt persönliche Netzwerke aus mehreren Mobilfiunkendgeräten oder aus Mobilfunkendgeräten und weiteren Geräten in einem persönlichen Bereich eines Benutzers über ein Mobilfunknetz. Die persönlichen Netzwerke werden von einer Managementeinrichtung (PNM: Personal Network Management) in dem Mobilfunknetz verwaltet. Dabei ist unter anderem ein Umleitungsdienst vorgesehen, welcher an ein Endgerät adressierte Daten an ein anderes Endgerät umleitet. Daten mit einer von mehren Endgeräten gemeinsam benutzten öffentlichen Nutzeridentität als Empfängeradresse werden an jedes dieser Endgeräte weitergeleitet.*

*Die* US 2004/0162092 A1 *stellt Verfahren und Vorrichtungen zur Verwaltung eines persönlichen Netzwerks aus Endgeräten über ein Mobilfunknetz oder anderen Kommunikationsnetzen dar. Einzelne geeignete Endgeräte des persönlichen Netzwerks ermöglichen eine Verwaltung und Änderun von Diensten für andere Endgeräte des persönlichen Netzwerks. Hierfür wird eine eindeutige Identität des entsprechenden Endgeräts verwendet. Dadurch lassen sich beispielsweise Telefonie-, Video- oder Datendienste für einzelne Endgeräte des persönlichen Netzwerks aktivieren oder deaktivieren. Ferner ist eine Umleitung von Daten für ein Endgerät an ein anderes voreingestelltes Endgerät möglich.*

*In der* WO 2007/045991 A1 *wird ein Übersetzungsmodul und ein entsprechendes Verfahren zum Übersetzen einer SIP-URI mit einer darin enthaltenen Telefonnummer in eine entsprechende tel-URI beschrieben. Das Übersetzungsmodul ist in einer IMS-Domäne eines Mobilfunknetzes vorgesehen. Auf diese Weise müssen in der IMS-Domäne nicht beide Adressen für eine Weiterleitung von Daten je nach verwendeter Adresse bereitgehalten werden. Hierfür reicht nunmehr eine Speicherung der tel-URI in der IMS-Domäne aus.*

In der DE 10 2005 015 111 A1 wird ein Verfahren zur Aufrechterhaltung einer Datenverbindung zu einem Endgerät bei einem Wechsel von einem Zugangsnetz eines Kommunikationsnetzes zu einem anderen Zugangsnetz offenbart. Dazu werden dem Endgerät neben einer öffentlichen Nutzeridentität des Nutzers in einer IMS-Domäne zwei private Nutzeridentitäten und zwei IP-Adressen zugewiesen. Das Endgerät registriert sich mit der öffentlichen Nutzeridentität und jeweils einer privaten Nutzeridentität und einer IP-Adresse bei zwei verschiedenen Zugangsnetzen zur Kommunikation über ein Kommunikationsnetz. Dadurch wird ein Wechsel zwischen zwei Zugangsnetzen, also ein so genannter "Handover" unter Aufrechterhaltung einer Datenverbindung ermöglicht.

Ein Nachteil der bekannten Verfahren und Einrichtungen zum Einrichten und Verwalten von persönlichen Netzwerken ist, dass solche persönlichen Netzwerke für Mobilfunkendgeräte eingesetzt werden und nicht für eine Fernsteuerung von Geräten ausgelegt sind. Daher ist eine Fernsteuerung von Geräten, beispielsweise in einem Haushalt, über ein persönliches Netzwerk nur sehr eingeschränkt und mit erheblichem Aufwand für einen Benutzer möglich. Ein weiterer Nachteil ergibt sich dadurch, dass die bekannten persönlichen Netzwerke nicht für eine Verwendung von Mobilfunkendgeräten ausgelegt sind, welche in einer IMS-Domäne angemeldet sind. Insbesondere werden öffentliche Nutzeridentitäten (IMPUs) für eine Nutzung von Mobilfunkendgeräten über eine IMS-Domäne nur unzureichend unterstützt. Eine IMPU ist geräteunabhängig und kann gleichzeitig mehrere Geräte adressieren. Dieser Umstand führt in den bekannten persönlichen Netzwerken zu Problemen bei einer Zuordnung von IMPUs an einzelne Geräte im persönlichen Netzwerk.

### Offenbarung der Erfindung

Aufgabe der Erfindung ist es daher, Nachteile des Standes der Technik zu vermeiden und eine flexible und für einen Benutzer einfach zu konfigurierende Nutzung verschiedener Kommunikations- und/oder Steuereinheiten in einem persönlichen Netzwerk einer IMS-Domäne zu ermöglichen.

Erfindungsgemäß wird die Aufgabe bei einer Einrichtung der eingangs genannten Art für ein persönliches Netzwerk einer IMS-Domäne, welches in einem öffentlichen Netzwerk und/oder einem lokalen Netzwerk vorgesehen ist, *dadurch* gelöst, *dass*
*e) Mittel (82) zur Verknüpfung einer öffentlichen Nutzeridentität (52, 54) im SIP-URI Adressformat und einer Adresse der weiteren Kommunikations- und*/*oder Steuereinheit (30) im tel-URI-Format (40, 42, 44) und*
*f) Mittel (84) zur Zuordnung von an die öffentliche Nutzeridentität (52, 54) adressierten Daten zu der weiteren Kommunikations- und*/*oder Steuereinheit (30) mit der verknüpften Adresse im tel-URI-Format (40, 42, 44) vorgesehen sind.*

Die Erfindung beruht auf dem Prinzip, in einem persönlichen Netzwerk für eine IMS-Domäne Umleitungsmittel vorzusehen. Die Umleitungsmittel ermöglichen ein Umleiten von Daten von einer in der IMS-Domäne angemeldeten Kommunikations- oder Steuereinheit zu einer anderen Kommunikations- oder Steuereinheit. Insbesondere wird dabei auch eine Adressierung der Kommunikations- oder Steuereinheiten mit öffentlichen Nutzeridentitäten einer IMS-Domäne von den Umleitungsmitteln berücksichtigt. Weiterhin unterstützen die Umleitungsmittel eine Adressierung und ein Umleiten von Daten von oder zu verschiedenen Geräten eines Benutzers über eine IMS-Domäne. Die Geräte können beispielsweise Geräte oder Netzwerke von Geräten in einem persönlichen Bereich des Benutzers sein, z.B. verschiedene Heimgeräte oder von dem Benutzer mitgeführte Geräte.

Mit den Umleitungsmitteln wird somit für einen Benutzer eine Einrichtung oder Umgestaltung eines persönlichen Netzwerks zwischen Kommunikations- und Steuereinheiten und Geräten über eine IMS-Domäne unkompliziert und benutzerfreundlich ermöglicht. Das persönliche Netzwerk lässt sich flexibel und schnell konfigurieren und ist somit an bestimmte Anforderungen durch den Benutzer anpassbar.

Eine vorteilhafte Ausgestaltung der erfindungsgemäßen Einrichtung für ein persönliches Netzwerk einer IMS-Domäne besteht darin, dass Auswahlmittel zur Einstellung der weiteren Kommunikations- und/oder Steuereinheit vorgesehen sind. Die Auswahlmittel sind z.B. in einer bereits in das persönliche Netzwerk eingebundenen Kommunikationsoder Steuereinheit oder in einer Vermittlungseinheit des persönlichen Netzwerks vorgesehen. Sie erleichtern einem Benutzer eine Auswahl zusätzlicher oder anderer Kommunikations- oder Steuereinheiten für ein Gerät. Dazu können die Auswahlmittel beispielsweise eine Liste aller möglichen in dem persönlichen Netzwerk registrierten Kommunikations- oder Steuereinheit für einen Benutzer zur Verfügung stellen und nach einer Auswahl durch den Benutzer eine entsprechende Konfiguration des persönlichen Netzwerks vornehmen. Auch ist eine Unterstützung eines Benutzers beim Einbinden weiterer Kommunikations- oder Steuereinheiten in das persönliche Netzwerk denkbar. Zur Identifikation und Auswahl von Kommunikations- oder Steuereinheiten verwenden die Auswahlmittel beispielsweise eine IMEI (International Mobile Equipment Identifier), IMPU, IMPI, tel-URI, SIP-URI oder IMSI (International Mobile Subscriber Identifier). Mit Hilfe der Auswahlmittel wird für einen Benutzer eine flexible Gestaltung eines persönlichen Netzwerks wesentlich einfacher möglich.

Eine weitere bevorzugte Ausbildung der erfindungsgemäßen Einrichtung wird durch eine Weitervermittlungseinheit zum automatischen Umleiten der Daten an eine weitere Kommunikations- und/oder Steuereinheit bei Abwesenheit der Kommunikationsund/oder Steuereinheit erreicht. Die Weitervermittlungseinheit ist vorzugsweise in der Vermittlungseinheit vorgesehen. Die weitere Kommunikations- oder Steuereinheit kann beispielsweise vorher durch einen Benutzer festgelegt oder durch die Weitervermittlungseinheit aus einer Liste verfügbarer Kommunikations- oder Steuereinheiten ausgewählt werden. Ein automatisches Umleiten von Daten durch die Weitervermittlungseinheit gewährleistet insbesondere bei einem Ausfall oder einem Abschalten der momentan zuständigen Kommunikations- oder Steuereinheit eine ungestörte und fortwährende Kommunikation mit einem Gerät oder Steuerung eines Geräts über eine weitere Kommunikations- oder Steuereinheit. Die Weitervermittlungseinheit trägt daher erheblich zu einer größeren Sicherheit bei einer Kommunikation oder Steuerung über ein persönliches Netzwerk bei.

Gemäß einer besonders vorteilhaften Ausgestaltung der erfindungsgemäßen Einrichtung für ein persönliches Netzwerk einer IMS-Domäne sind Mittel zur Verknüpfung von Adressen in den Adressformaten SIP-URI und tel-URI vorgesehen. Eine Adresse im SIP-URI-Format ist eindeutig bezüglich eines Benutzers und kann von allen Endgeräten des Benutzers verwendet werden. Durch die Mittel wird eine Verknüpfung mit einer tel-URI (Telephone Uniform Resource Identifier) im E.164-Standard, d.h. einer herkömmlichen geräte- oder anschlussgebundenen Telefonnummer, erreicht und es lässt sich jedes über die gleiche SIP-URI adressierte Endgerät eindeutig identifizieren. Somit wird eine korrekte und eindeutige Konfiguration eines persönlichen Netzwerks, wie beispielsweise eine Rufumleitung, mit einer SIP-URI für mehrere Endgeräte durch eine Verknüpfung mit einer jeweiligen, gerätespezifischen tel-URI ermöglicht. Insbesondere wird für einen Benutzer durch eine Angabe einer SIP-URI in Kombination mit einer tel-URI eine einfache und exakte Benennung eines von mehreren über eine SIP-URI adressierten Endgeräten bei einer Konfiguration eines persönlichen Netzwerks erreicht.

In einer weiteren bevorzugten Ausbildung der erfindungsgemäßen Einrichtung sind Mittel zur Zuordnung einer eigenen öffentlichen Nutzeridentität einer IMS-Domäne (IMPU) zu einer Adresse im tel-URI-Format für eine Kommunikations- und/oder Steuereinheit enthalten. Ein in einer IMS-Domäne registrierter Benutzer erhält eine oder mehrere öffentliche Nutzeridentitäten, mit denen der Benutzer von anderen Benutzern oder Diensten kontaktiert werden kann. Wenn eine IMPU gleichzeitig verschiedene Endgeräte adressiert, wird durch die Mittel zur Zuordnung einer tel-URI zu einer IMPU genau ein Endgerät bezeichnet. Dadurch wird wiederum eine unkomplizierte und exakte Konfiguration eines persönlichen Netzwerks durch einen Benutzer erzielt. Möchte ein Benutzer beispielsweise eine Rufumleitung nur eines von mehreren über eine IMPU erreichbaren Endgeräte einrichten, so ist dieses mit Hilfe der Zuordnungsmittel durch eine einfache Angabe der IMPU und einer entsprechenden tel-URI möglich.

Ferner wird eine vorteilhafte Ausbildung der Erfindung dadurch erzielt, dass die Kommunikationseinheit als Überwachungseinheit zur Überwachung von Geräten ausgebildet ist. Neben einer Kommunikation mit Geräten oder einer Steuerung von Geräten, welche in ein persönliches Netzwerk eingebunden sind, wird mit einer Überwachungseinheit auch eine einfache, benutzerfreundlich und flexibel einstellbare Überwachung von Geräten über das persönliche Netzwerk für Benutzer möglich. Mit in das persönliche Netzwerk integrierbaren Überwachungseinheiten wird die erfindungsgemäße Einrichtung und das persönliche Netzwerk mit allen weiter oben genannten Vorzügen universeller einsetzbar.

Weitere Ausgestaltungen und Vorteile ergeben sich aus dem Gegenstand der Unteransprüche, sowie der Zeichnung mit der dazugehörigen Beschreibung. Ein Ausführungsbeispiel der Erfindung ist nachstehend unter Bezugnahme auf die zugehörige Zeichnung näher erläutert.

### Kurze Beschreibung der Zeichnung

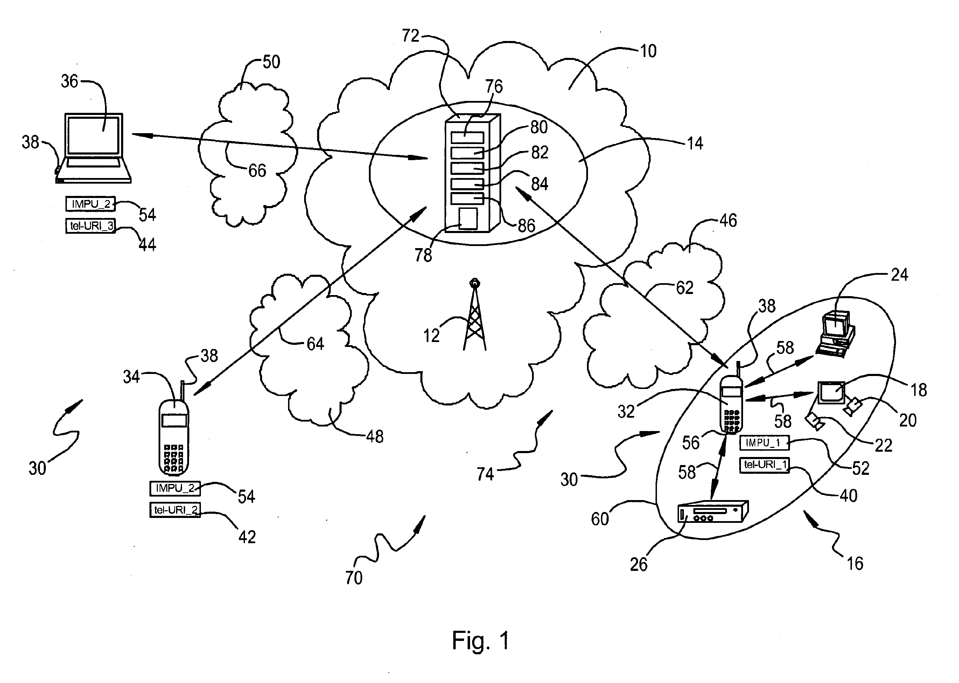

- Fig. 1: zeigt in einer schematischen Prinzipskizze ein Ausführungsbeispiel einer Einrichtung für ein persönliches Netzwerk über eine IMS-Domäne eines Mobilfunknetzes.

### Bevorzugtes Ausführungsbeispiel

In Fig. 1 wird mit 10 ein Mobilfunknetz bezeichnet. Das Mobilfunknetz 10 ist ein Mobilfunknetz der 2,5., 3. oder 4. Generation, beispielsweise nach dem GSM/GPRS-, UMTS-, CDMA2000-, FOMA-, TD-SCDMA- oder WiMAX-Standard. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt. Das Mobilfunknetz 10 enthält ein IP-Multimedia-Subsystem (IMS) 14 zum Integrieren und Anbieten von IP-basierten Multimedia-Diensten und anderen Diensten für Benutzer. Dazu verwendet das IMS 14 unter anderem ein SIP-Protokoll.

Ein Benutzer verfügt über verschiedene Geräte 16, welche über die IMS-Domäne 14 ferngesteuert oder überwachend werden oder mit denen der Benutzer mittels der IMS-Domäne 14 kommuniziert. Die Geräte 16 bestehen beispielhaft aus einer Überwachungseinrichtung 18 mit Kameras 20, 22, einem PC (Personal Computer) 24 und einem Audio-Video-System 26 zum Aufnehmen und Wiedergeben von Audio-, Video- oder Multimediadaten. Es sind aber auch andere Geräte 16 denkbar. Wesentliches Merkmal der Geräte 16 ist die Fähigkeit, Daten und Befehle senden und/oder empfangen und auf diese reagieren zu können. Insbesondere ist eine Vernetzung von mehreren Geräten 16 in einem lokalen Netzwerk möglich. Diese vernetzten Geräte 16 werden dann über das lokale Netzwerk (z.B. ein Heimnetz) gesteuert, wobei das lokale Netzwerk quasi als ein Gerät 16 betrachtet werden kann.

Die Geräte 16 befinden sich vorzugsweise in einem privaten Bereich eines Benutzers, beispielsweise einer Wohnung oder einem Haus, einem Auto oder Wohnmobil, einer Yacht oder einem Arbeitsplatz oder Büro des Benutzers. Auch ist eine Verteilung der Geräte 16 über mehrere private Bereiche eines Benutzers oder eine Gruppierung von Benutzern zur Bildung eines oder mehrerer gemeinsamer privater Bereiche zur gemeinsamen Überwachung und Steuerung von oder Kommunikation mit darin enthaltenen Geräten 16 möglich. Ferner ist eine Überwachung und Steuerung von öffentlich zugänglichen Geräten 16 eines Benutzers, z.B. eines Getränkeautomaten denkbar.

Weiterhin verfügt der Benutzer über mehrere Kommunikations-, Steuer- oder Überwachungseinheiten 30 zur Steuerung und Überwachung der Geräte 16 oder zur Kommunikation mit den Geräten 16 über die IMS-Domäne 14. Vorzugweise wird der Benutzer als Kommunikations-, Steuer- oder Überwachungseinheiten 30 ihm bereits zur Kommunikation zur Verfügung stehende, IMS-fähige Geräte benutzen. Es ist aber auch ein Einsatz von speziell zur Fernsteuerung und -überwachung über die IMS-Domäne ausgebildeten Kommunikations-, Steuer- oder Überwachungseinheiten 30 möglich. Beispielhaft verfügt der Benutzer als Kommunikations-, Steuer- oder Überwachungseinheiten 30 über drei Mobilfunkendgeräte 32, 34, 36 zur kabellosen Kommunikation oder hat Zugriff auf diese.

Die Mobilfunkendgeräte 32, 34, 36 können beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 38 (z.B. eine PMCCIA-Karte) sein. Mit den Mobilfunkendgeräten 32, 34, 36 ist eine Kommunikation über das Mobilfunknetz 10 möglich. Dazu besitzt jedes Mobilfunkendgerät 32, 34, 36 eine eindeutige Telefonnummer 42, 44, 46 im tel-URI-Format.

Insbesondere ist mit den Mobilfunkendgeräten 32, 34, 36 eine Nutzung der IMS-Domäne 14 möglich. Dazu melden sich die Mobilfunkendgeräte 32, 34, 36 jeweils über ein Zugangssystem 46, 48, 50 bei der IMS-Domäne 14 an. Die Zugangssysteme 46, 48, 50 werden aus verschiedenen leitungs- oder paketorientierten Funk- oder Kabelnetzwerken gebildet, welche zumindest teilweise in dem Mobilfunknetz 10 enthalten oder mit diesem verbunden sind. Zugangssysteme für Mobilfunknetze der 2. oder 3. Generation sind dem Fachmann geläufig. Die Zugangssysteme 46, 48, 50 werden daher in Fig. 1 der Einfachheit halber als Wolken dargestellt. Zur Adressierung bei einer Kommunikation mit anderen Teilnehmern oder einer Inanspruchnahme von Diensten über die IMS-Domäne 14 benutzt das Mobilfunkgerät 32 eine erste öffentliche Nutzeridentität (IMPU) 52 des Benutzers, während die Mobilfunkendgeräte 34, 36 eine zweite öffentliche Nutzeridentität 54 verwenden.

Das Mobilfunkendgerät 32 mit der tel-URI 40 und der zugeordneten öffentlichen Nutzerkennung 52 nimmt eine Sonderstellung ein, da es sich in der Nähe der Geräte 16 in einem privaten Bereich des Benutzers befindet und mit den Geräten 16 über mindestens eine Schnittstelle 56 zum Austausch von Daten verbunden ist (Pfeile 58). Das Mobilfunkendgerät 32 bildet zusammen mit den Geräten 16 ein lokales Netzwerk 60 zum Austausch von Daten und Befehlen zwischen den Geräten 16. Auch ist eine Steuerung und Überwachung der Geräte 16 mit dem Mobilfunkendgerät 32 über die Schnittstelle 56 möglich. Andererseits dient das Mobilfunkendgerät 32 als Gateway zwischen dem lokalen Netzwerk 60 bzw. einzelner Geräte 16 und der IMS-Domäne 14. Mit dieser ist das Mobilfunkendgerät 32 über das Zugangssystem 46 verbunden (Pfeil 62). Über das Mobilfunkgerät 32 und die IMS-Domäne 14 sind die Geräte 16 von den Mobilfunkendgeräten 34, 36 über die Zugangssysteme 48, 50 für eine Überwachung, Steuerung oder Kommunikation erreichbar (Pfeile 64, 66).

Um dem Benutzer eine Nutzung, Verwaltung und Koordination der Mobilfunkendgeräte 32, 34, 36 und eine Steuerung und Überwachung der Geräte 16 bzw. eine Kommunikation mit den Geräten 16 zu erleichtern, ist über die IMS-Domäne 14 ein persönliches Netzwerk 70 zwischen den Mobilfunkendgeräten 32, 34, 36 und den Geräten 16 eingerichtet. Dazu verfügt die IMS-Domäne 14 über eine Einrichtung 72 zum Verwalten von persönlichen Netzwerken. Die Einrichtung 72 kann z.B. durch einen SIP-Applikations-Server realisiert werden und wird im Weiteren als PNM (Personal Network Management) 72 bezeichnet. Das PNM 72 bildet zusammen mit dem Mobilfunkendgerät 32 eine Vermittlungseinheit 74 zum benutzerfreundlichen Vermitteln von Daten zwischen den Geräten 16 und den Mobilfunkendgeräten 34, 36 als Kommunikations-, Steuer- oder Überwachungseinheiten 30.

Zum Umleiten von an eine Kommunikations-, Steuer- oder Überwachungseinheit 30 adressierten Daten zu einem anderen Kommunikations-, Steuer oder Überwachungseinheit 30 sind in dem PNM 72 Umleitungsmittel 76 vorgesehen. Mit den Umleitungsmitteln 76 können beispielsweise an das Mobilfunkendgerät 34 adressierte Daten eines oder mehrerer Geräte 16 an das Mobilfunkendgerät 36 umgeleitet werden. Dazu verwenden die Umleitmittel 76 in einem Konfigurationsspeicher 78 gespeicherte Konfigurationsdaten des persönlichen Netzwerks 70. Die Konfigurationsdaten werden mit Hilfe von in dem PNM 76 enthaltenen Auswahlmitteln 80 zum Auswählen einer Kommunikations- oder Steuereinheit 30 für Daten von bestimmten Geräten 16 durch den Benutzer erstellt oder verändert. Dabei kann auch eine Auswahl einer Kommunikationsoder Steuereinheit 30 nach Datenformaten erfolgen. Alternativ sind die Auswahlmittel 80 ganz oder teilweise in den Kommunikations- oder Steuereinheiten 30 enthalten.

Die Umleitungsmittel 76 und die Auswahlmittel 80 verwenden bevorzugt die öffentliche Nutzeridentitäten (IMPUs) 52, 54 und die tel-URIs 40, 42, 44 zum Adressieren von Kommunikations- oder Steuereinheit 30. Es ist aber auch eine Benutzung von einem IMEI (International Mobile Equipment Identifier), IMPI, oder IMSI (International Mobile Subscriber Identifier) möglich. Die Geräte 16 werden über das Mobilfunkendgerät 32 und zusätzliche internen Adressen des lokalen Netzwerks 60 adressiert. Da die IMPU 54 sowohl von dem Mobilfunkendgerät 34 als auch von dem Mobilfunkendgerät 36 verwendet wird, stellt diese Mehrdeutigkeit bei einer Umleitung unter Verwendung von IMPUs ein Problem dar. Deshalb sind weiterhin Verknüpfungsmittel 82 zum Verknüpfen von Adressen im SIP-URI- mit Adressen im tel-URI- Format in dem PNM 72 enthalten. Mit ebenfalls vorgesehenen Zuordnungsmitteln 84 wird eine Zuordnung von einer IMPU als Sender- oder Empfängeradresse von Daten zu einer tel-URI einer Kommunikations-, Steuer oder Überwachungseinheit 30 vorgenommen.

Ferner beinhaltet das PNM 72 eine Weitervermittlungseinheit 86 zum automatischen Weiterleiten von Daten an eine Kommunikations-, Steuer- oder Überwachungseinheit 30 zu einer anderen Kommunikations-, Steuer- oder Überwachungseinheit 30, falls die erste nicht angemeldet ist bzw. abgemeldet oder ausgeschaltet wird.

Um das persönliche Netzwerk 70 für die Geräte 16 und die Kommunikations-, Steuerund Überwachungsgeräte 30 zu nutzen, stellt ein Benutzer zunächst als Empfängeradresse von Daten der Geräte 16 die öffentliche Nutzeridentität (IMPU) 54 der IMS-Domäne 14 in dem Mobilfunkendgerät 32 ein. Das Mobilfunkendgerät 32 sendet daraufhin alle Daten von den Geräten 16 mit der IMPU 54 als Empfangsadresse an die IMS-Domäne 14. Wenn beide Mobilfunkendgeräte 34, 36 mit der IMPU 54 bei der IMS-Domäne 14 angemeldet sind, werden die Daten an beide Mobilfunkendgeräte 34, 36 weitergeleitet. Möchte der Benutzer Daten von den Geräten 16 nur auf einem der Mobilfunkendgeräte 34, 36 empfangen, so teilt er dies der Einrichtung 72 durch übermitteln der IMPU 54 und der entsprechenden tel-URI 42, 44 des Mobilfunkendgeräts 34, 36 mit Hilfe der Auswahlmittel 80 und einem Mobilfunkendgerät 32, 34, 36 mit. Bei der Einrichtung 72 werden die IMPU 54 und die entsprechende tel-URI 42, 44 mit den Verknüpfungsmitteln 82 verknüpft und in dem Konfigurationsspeicher 78 gespeichert. Zukünftig werden alle an die IMPU 54 adressierte Daten mit den Zuordnungsmitteln 84 dem Mobilfunkendgerät 34, 36 mit der entsprechenden tel-URI 42, 44 zugeordnet und nur noch an das jeweilige Mobilfunkendgerät 42, 44 weitergeleitet. Durch eine Verwendung von dem Benutzer wohlbekannten IMPUs 52, 54 und tel-URIs 40, 42, 44 ist eine Einrichtung oder Änderung einer Umleitung von Daten von den Geräte 16 sehr benutzerfreundlich möglich.

Entsprechend können von externen Quellen über das Mobilfunkendgerät 32 an eines oder mehrere Geräte 16 gesendete Daten an eines der Mobilfunkendgeräte 34, 36 umgeleitet werden. Beispielsweise ist eine Umleitung von Videodaten eines externen Videoservers an das Audio-Video-System 26 über das Mobilfunkendgerät 32 oder den PC 24 über eine in Fig. 1 nicht dargestellt schnelle Internetverbindung an das Mobilfunkendgerät 36 möglich. Eine dazu notwendige Konfiguration der Einrichtung 72 wird ebenfalls mit den entsprechenden IMPUs 52, 54 und den tel-URIs 40, 42, 44 für einen Benutzer sehr einfach vorgenommen.

Weiterhin ist mit Hilfe von internen Geräteidentitäten des lokalen Netzwerks 60 eine Umleitung von Daten von oder zu nur einem bestimmten Gerät 16 an ein Mobilfunkendgerät 34, 36 möglich. Somit kann jedem Gerät 16 in dem lokalen Netzwerk ein bevorzugtes Mobilfunkendgerät 34, 36 zum Kommunizieren, Steuern oder Überwachen zugeordnet werden. Ferner ist eine Umleitung in Abhängigkeit von dem Datenformat der gesendeten Daten möglich. Dadurch wird sichergestellt, dass jeweils das am besten zur Darstellung der Daten geeignete Mobilfunkendgerät 34, 36 verwendet wird.

Mit Hilfe der Einheit 72 in der IMS-Domäne 14 und der Nutzung von IMPUs 52, 54 und tel-URIs 40, 42, 44 wird somit eine unkomplizierte und sehr flexible Konfiguration einer Umleitung von Daten von oder zu Geräten 16 oder Kommunikations-, Steuer- und Überwachungseinheiten 30 ermöglicht.

### Bezugszeichenliste

- 10: Mobilfunknetz
- 12: stilisierter Funkmast
- 14: IMS-Domäne
- 16: Geräte
- 18: Überwachungseinrichtung
- 20: 1. Kamera
- 22: 2. Kamera
- 24: PC
- 26: Audio-Video-System
- 30: Kommunikations- / Steuereinheiten
- 32: 1. Mobilfunkendgerät (1. UE)
- 34: 2. Mobilfunkendgerät (2. UE)
- 36: 3. Mobilfunkendgerät (3. UE)
- 38: Mobilfunkschnittstelle
- 40: tel-URI 1. UE
- 42: tel-URI 2. UE
- 44: tel-URI 3. UE
- 46: Zugangssystem 1. UE
- 48: Zugangssystem 2. UE
- 50: Zugangssystem 3. UE
- 52: 1. IMPU
- 54: 2. IMPU 56 Schnittstelle 1.UE
- 58: Verbindung 1. UE - Geräte
- 60: lokales Netzwerk
- 62: Verbindung IMS - 1. UE
- 64: Verbindung IMS - 2. UE
- 66: Verbindung IMS - 3. UE
- 70: persönliches Netzwerk
- 74: Vermittlungseinheit
- 72: Einrichtung (PNM)
- 76: Umleitungsmittel
- 78: Konfigurationsspeicher
- 80: Auswahlmittel
- 82: Verknüpfungsmittel
- 84: Zuordnungsmittel
- 86: Weiterleitungsmittel

## Patentansprüche

1. Einrichtung (72) für ein persönliches Netzwerk (70) einer IMS-Domäne (14), welches in einem öffentlichen Netzwerk (10) und/oder einem lokalen Netzwerk (60) vorgesehen ist, enthaltend
a) wenigstens ein Gerät (16), welches in dem persönlichen Netzwerk (70) integriert ist,
b) eine Kommunikations- und/oder Steuereinheit (30) zur Kommunikation mit dem Gerät (16) und/oder zur Steuerung des Geräts (16),
c) eine Vermittlungseinheit (74) zur Vermittlung der Daten zwischen der Kommunikations- und/oder Steuereinheit (30) und dem Gerät (16),
d) Umleitungsmittel (76) zum Umleiten von Daten auf eine weitere Kommunikations- und/oder Steuereinheit (30),
***dadurch gekennzeichnet, dass***
*e) Mittel (82) zur Verknüpfung einer öffentlichen Nutzeridentität (52, 54) im SIP-URI-Adressformat und einer Adresse der weiteren Kommunikations- und*/*oder Steuereinheit (30) im tel-URI Format (40, 42, 44) und*
*f) Mittel (84) zur Zuordnung von an die öffentliche Nutzeridentität (52, 54) adressierten Daten zu der weiteren Kommunikations- und*/*oder Steuereinheit (30) mit der verknüpften Adresse im tel-URI-Format (40, 42, 44) vorgesehen sind.*

2. Einrichtung (72) für ein persönliches Netzwerk (70) einer IMS-Domäne (14) nach Anspruch 1, **gekennzeichnet durch** Auswahlmittel (80) zur Einstellung der weiteren Kommunikations- und/oder Steuereinheit (30).

3. Einrichtung (72) für ein persönliches Netzwerk (70) einer IMS-Domäne (14) nach einem der Ansprüche 1 oder 2, **gekennzeichnet durch** eine Weitervermittlungseinheit (86) zum automatischen Umleiten der Daten an eine weitere Kommunikations- und/oder Steuereinheit (30) bei Abwesenheit der Kommunikations- und/oder Steuereinheit (30).

4. Einrichtung (72) für ein persönliches Netzwerk (70) einer IMS-Domäne (14) nach einem der Ansprüche 1 bis 3, **dadurch gekennzeichnet, dass** die Kommunikationseinheit (30) als Überwachungseinheit zur Überwachung von Geräten (16) ausgebildet ist.

## Claims

1. A device (72) for a personal network (70) of an IMS domain (14) which is provided on a public network (10) and/or a local network (60), comprising
a) at least one device (16) which is integrated in the personal network (70),
b) a communication and/or control unit (30) for communication with the device (16) and/or for controlling the device (16),
c) a switching unit (74) for transferring data between the communication and/or control unit (30) and the device (16),
d) redirecting means (76) for redirecting data to a further communication and/or control unit (30),
**characterized in that**
e) means (82) for linking a public user identity (52, 54) in the SIP URI address format and an address of the further communication and/or control unit (30) in the tel URI format (40, 42, 44), and
f) means (84) for assigning data addressed to the public user identity (52, 54) to the further communication and/or control unit (30) with the linked address in the tel URI format (40, 42, 44) are provided.

2. A device (72) for a personal network (70) of an IMS domain (14) according to claim 1, **characterized by** selection means (80) for setting the further communication and/or control unit (30).

3. A device (72) for a personal network (70) of an IMS domain (14) according to any one of claims 1 or 2, **characterized by** a forwarding unit (86) for automatically redirecting the data to a further communication and/or control unit (30) in the absence of the communication and/or control unit (30).

4. A device (72) for a personal network (70) of an IMS domain (14) according to any one of claims 1 to 3, **characterized in that** the communication unit (30) is designed as a monitoring unit for monitoring of devices (16).

## Revendications

1. Dispositif (72) destiné à un réseau personnel (70) d'un domaine IMS (IP multimédia) (14) prévu dans un réseau public (10) et/ou un réseau local (60), comprenant
(a) au moins un appareil (16) intégré dans le réseau personnel (70),
(b) une unité de communication et/ou de commande (30) destinée à la communication avec l'appareil (16) et/ou à la commande de l'appareil (16),
(c) une unité de transmission (74) destinée à transmettre des données entre l'unité de communication et/ou de commande (30) et l'appareil (16),
(d) des moyens de redirection (76) destinés à rediriger des données vers une unité de communication et/ou de commande (30) supplémentaire,
**caractérisé en ce que**
(e) il est prévu des moyens (82) destinés à associer une identité d'utilisateur public (52, 54) en format d'adresse SIP URI et une adresse de l'unité de communication et/ou de commande (30) supplémentaire en format tel URI (40, 42, 44) et,
(f) il est prévu des moyens (84) destinés à affecter des données adressées à l'identité d'utilisateur public (52, 54) à l'unité de communication et/ou de commande (30) supplémentaire avec l'adresse associée en format tel URI (40, 42, 44).

2. Dispositif (72) destiné à un réseau personnel (70) d'un domaine IMS (14) selon la revendication 1, **caractérisé par** des moyens de sélection (80) destinés à régler l'unité de communication et/ou de commande (30) supplémentaire.

3. Dispositif (72) destiné à un réseau personnel (70) d'un domaine IMS (14) selon l'une quelconque des revendications 1 ou 2, **caractérisé par** une unité de transfert (86) destinée à rediriger automatiquement les données vers une unité de communication et/ou de commande (30) supplémentaire en cas d'absence de l'unité de communication et/ou de commande (30).

4. Dispositif (72) destiné à un réseau personnel (70) d'un domaine IMS (14) selon l'une quelconque des revendications 1 à 3, **caractérisé en ce que** l'unité de communication (30) est configurée sous forme d'unité de surveillance destinée à surveiller les appareils (16).
